# EUROPÄISCHE PATENTSCHRIFT

(11) **EP 0 998 348 B1**
(45) Veröffentlichungstag und Bekanntmachung des Hinweises auf die Patenterteilung: **08.08.2001**
(21) Anmeldenummer: 98936268.6
(22) Anmeldetag: 25.07.1998
(51) Int. Cl.: B01J 19/12, B01J 3/04, C02F 1/30, C02F 11/18, B01J 19/18, B01J 8/18

(54) **VERFAHREN ZUR KONTINUIERLICHEN BEHANDLUNG ORGANISCHER SUBSTANZEN MITTELS MIKROWELLEN**
METHOD FOR CONTINUOUSLY PROCESSING ORGANIC SUBSTANCES USING MICROWAVES
PROCEDE POUR LE TRAITEMENT EN CONTINU DE SUBSTANCES ORGANIQUES AU MOYEN DE MICRO-ONDES

(30) Priorität: 25.07.1997 DE 19732080
(43) Veröffentlichungstag der Anmeldung: 10.05.2000
(73) Patentinhaber: ATZ-EVUS Applikations- und Technikzentrum für Energieverfahrens-, Umwelt- und Strömungstechnik, 92237 Sulzbach-Rosenberg (DE)
(72) Erfinder: CHWISTEK, Margarete, D-92237 Sulzbach-Rosenberg (DE); SCHNEIDER, Ralf, D-90402 Nürnberg (DE); JUNG, Rolf, D-91710 Gunzenhausen (DE)
(74) Vertreter: Gassner, Wolfgang, Dr.
(86) Internationale Anmeldenummer: DE9802063
(87) Internationale Veröffentlichungsnummer: WO9904897

(56) Entgegenhaltungen:
- WO-A-89/09750
- FR-A- 2 614 490
- GB-A- 2 271 518
- US-A- 3 523 076
- US-A- 4 416 913
- US-A- 5 589 599
- PATENT ABSTRACTS OF JAPAN vol. 16, no. 584 (C-1013), 24. Dezember 1992 -& JP 04 235781 A (MATSUSHITA ELECTRIC IND. CO. LTD.), 24. August 1992

## Beschreibung

Die Erfindung betrifft ein Verfahren nach dem Oberbegriff des Anspruchs 1.

Ein solches Verfahren und eine solche Vorrichtung sind aus der DE 195 06 577 A1 bekannt. Dabei wird die zu behandelnde organische Restmasse unter Druck durch ein für Mikrowellen durchlässiges Rohr gepumpt. Damit das Rohr dem Druck standhält, wird auf seine äußere Rohrwandung ein Gegendruck ausgeübt. Dazu ist das Rohr in einem unter einem Gasüberdruck stehenden Druckbehälter aufgenommen, der abschnittsweise mikrowellendurchlässig ist.

Die Herstellung nach dem bekannten Verfahren arbeitender Vorrichtungen ist aufwendig. Wegen des relativ geringen Rohrdurchmessers erlauben sie einen nur geringen Durchsatz an organischer Substanz. Da die Mittel zur Erzeugung von Mikrowellen außerhalb des Druckbehälters angeordnet sind, muß die Vorrichtung aus Sicherheitsgründen zusätzlich abgeschirmt werden. Sowohl das Rohr als auch der Druckbehälter müssen über einen relativen großen Abschnitt aus einem für Mikrowellen transparenten Material hergestellt sein. Der großflächige Einsatz solcher meist spröden oder duktilen Materialen begrenzt den maximalen Arbeitsdruck. - Bei einem unvorhergesehenen Druckabfall im Druckbehälter kann das Rohr bersten; dabei kann toxische organische Substanz freigesetzt werden.

Aus der EP 0 003 985 A1 ist es bekannt, einen Schlaufenreaktor zur Hydroformylierung von Olefinen zu verwenden. Die EP 0 281 302 A1 und die EP 0 580 403 A1 offenbaren Oxidationsverfahren unter Verwendung eines Schlaufenreaktors. In der US 3,945,805 ist die Hochtemperaturumwandlung von Kohlenwasserstoff in gasförmige Produkte unter Verwendung eines Schlaufenreaktors bekannt. - Die bekannten Schlaufenreaktoren sind zwar z.T. beheizbar. Dennoch gelingt es mit den damit erzeugbaren Drücken und Temperaturen nachteiligerweise nicht, organische Substanz, wie Emulgatoren und dgl., zu zerstören.

Aufgabe der Erfindung ist es, die Nachteile des Stands der Technik zu beseitigen. Insbesondere soll ein Verfahren angegeben werden, mit dem eine organische Substanz bei hohem Durchsatz unter möglichst hohem Druck einer Mikrowellenbehandlung aussetzbar ist.

Diese Aufgabe wird durch die Merkmale der Ansprüche 1 gelöst. Vorteilhafte Ausgestaltungen ergeben sich aus den Merkmalen der Ansprüche 2 bis 20.

Nach Maßgabe der verfahrenseitigen Lösung ist vorgesehen, daß die zu behandelnde Substanz im Reaktor in einem radial innenliegenden Zylinderabschnitt axial in eine erste Richtung und in einem radial außenliegenden Abschnitt axial in eine zweite Richtung strömt, wobei die zweite Richtung der ersten Richtung entgegengesetzt ist. Unter Verwendung des erfindungsgemäßen Verfahrens können organische Substanzen mit hohem Durchsatz unter hohem Druck einer Mikrowellenbehandlung ausgesetzt werden. Die gleichzeitige Behandlung der Substanz mit hohem Druck und Mikrowellen führt überraschenderweise zu einem sehr weitgehenden Abbau darin enthaltener organischer Bestandteile in für die Umwelt weitgehend unbedenkliche Verbindungen wie Kohlenstoff, Kohlendioxid und dgl.

Vorteilhafterweise wird die Mikrowellenenergie durch mindestens ein an der Reaktorwand angebrachtes Mittel zur Erzeugung von Mikrowellen abgegeben. Somit kann insbesondere auf das Vorsehen eines besonderen den Reaktor umgebenden Druckbehälters verzichtet werden. Das ermöglicht eine kompakte Bauweise.

Die vom Mittel zur Erzeugung von Mikrowellen erzeugten Mikrowellen werden vorteilhafterweise mittels eines Wellenleiters in den Reaktor eingekoppelt. So kann die im Reaktor aufgenommene Substanz gezielt mit hoher Mikrowellenenergie beaufschlagt werden. Zwischen dem Mittel zur Erzeugung von Mikrowellen und dem Reaktor kann ein mikrowellentransparentes Fenster vorgesehen sein. Das mikrowellentransparente Fenster ist beispielsweise aus Glas, Keramik, Kunststoff oder dgl. hergestellt. Der Durchmesser bzw. Querschnitt des Mikrowellentransparenten Fensters ist vorteilhafterweise größer als der Durchmesser bzw. Querschnitt des Wellenleiters ausgebildet, so daß das mikrowellentransparente Fenster diesen im Einbauzustand überdeckt. So ist es möglich nur kleine druchbeaufschlagte Abschnitte der Vorrichtung aus mikrowellentransparentem Material herzustellen. Eine solche Vorrichtung kann unter einem besonders hohen Druck betrieben werden. Durch die Trennung des Reaktors und des Mittels zur Erzeugung von Mikrowellen ist eine Wartung desselben erleichtert.

Die Mikrowellen können durch mehrere in der Nähe des Bodens und/oder der Decke und/oder der Mantelfläche des Reaktors angeordnete Mittel zur Erzeugung von Mikrowellen abgegeben werden. Das bewirkt eine besonders homogene Beaufschlagung der im Reaktor aufgenommenen Substanz mit Mikrowellenenergie. Die Mikrowellen werden zweckmäßigerweise mittels eines Magnetrons erzeugt.

Nach einem Ausgestaltungsmerkmal können die in der Nähe des Bodens vorgesehenen Mittel zur Erzeugung von Mikrowellen gegen die in der Nähe der Decke vorgesehenen Mittel zur Erzeugung von Mikrowellen radial versetzt sein. Das gewährleistet eine besonders effektive Behandlung der im Reaktor zirkulierenden Substanz.

Nachfolgend werden anhand der Zeichnung Ausführungsbeispiele der Erfindung näher erläutert. Hierin zeigen
- Fig. 1: ein schematisches Blockschaltbild,
- Fig. 2a: einen schematischen Querschnitt durch ein erstes Ausführungsbeispiel eines Schlaufenreaktors,
- Fig. 2b: einen Axialschnitt gemäß Fig. 2a,
- Fig. 3a: eine schematische Querschnittsansicht eines zweiten Ausführungsbeispiels eines Schlaufenreaktors,
- Fig. 3b: einen Axialschnitt gemäß Fig. 3a,
- Fig. 4: einen schematischen Querschnitt durch ein drittes Ausführungsbeispiel eines Schlaufenreaktors und
- Fig. 5: einen Axialschnitt durch ein viertes Ausführungsbeispiel eines Schlaufenreaktors.

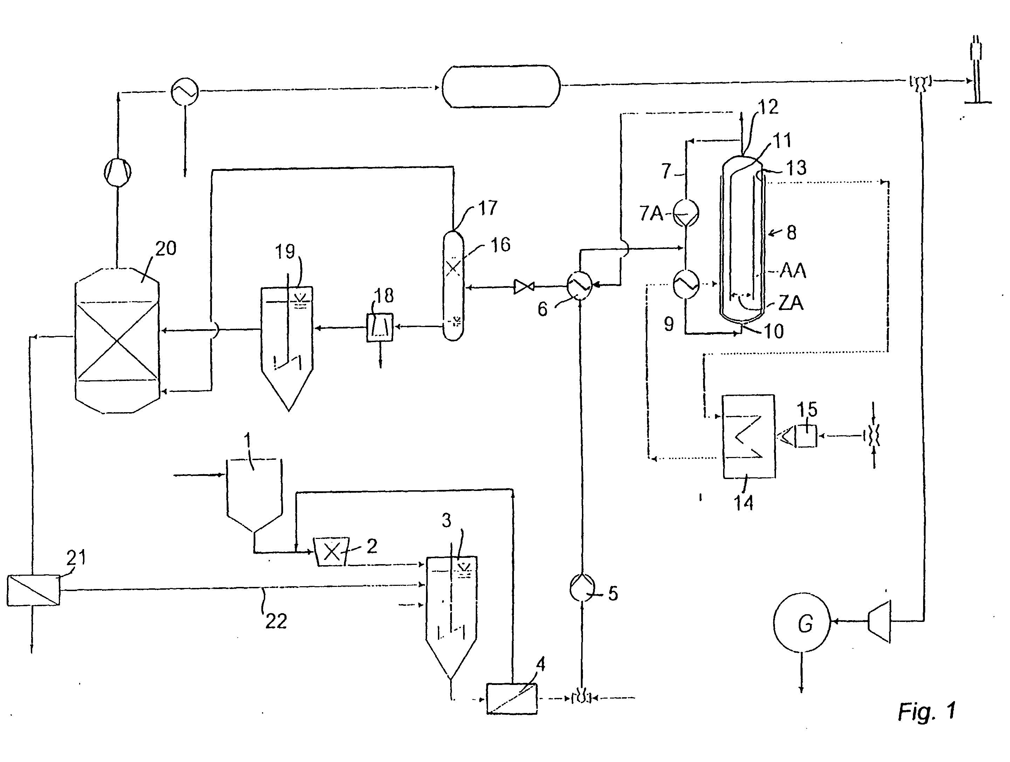

Fig. 1 zeigt ein schematisches Blockschaltbild. Organische Substanzen werden in einem Behälter 1 gesammelt. Sie werden von da aus ggf. einer Zerkleinerungsvorrichtung 2 zugeführt. In der Zerkleinerungsvorrichtung 2 werden die Feststoffe auf Partikelgrößen von 10 - 20 mm zerkleinert. Die zerkleinerten Feststoffe gelangen dann in einen Anmaischbehälter 3. Dort werden die Feststoffe mit Flüssigkeit, bspw. im Verhältnis von 1:10, zur Herstellung einer Suspension verrührt. Ein dem Anmaischbehälter 3 nachgeschalteter Grobfilter 4 dient zur Abtrennung unerwünscht großer Partikel. Diese werden zur Zerkleinerungsvorrichtung 2 zurückgeführt.

Die Suspension bzw. die flüssige organische Substanz wird sodann mittels einer Hochdruckpumpe 5 über einen ersten Wärmetauscher 6 vorteilhafterweise auf einen Bypass 7 geleitet. Der erste Wärmetauscher 6 wird von heißer Suspension durchströmt, welche einen Reaktor 8 verlassen hat. Die vorerwärmte Suspension durchströmt einen im Bypass 7 nachgeschalteten zweiten Wärmetauscher 9, der von heißem Thermalöl durchströmt wird. Von da gelangt die erwärmte Suspension via einer in einer Aufgabeöffnung 10 vorgesehenen Düse (hier nicht dargestellt) unter gleichzeitiger Bildung eines Triebstrahls in den Reaktor 8. Beim Reaktor 8 handelt es sich um einen Schlaufenreaktor. Im Inneren des zylindrisch ausgebildeten Reaktorbehälters befindet sich in koaxialer Anordnung ein vorteilhafterweise mikrowellentransparent ausgebildetes, Rohr 11. Das Rohr 11 begrenzt einen radial innenliegenden Zylinderabschnitt ZA. In diesem Zylinderabschnitt ZA strömt die Suspension axial in Richtung einer Überströmöffnung 12. Wenn das Rohr aus einen mikrowellentransparenten Material hergestellt ist, gelangen die Mikrowellen vorteilhafterweise auch in den innenliegenden Zylinderabschnitt 2A. Der Überströmöffnung 12 kann ein sich senkrecht zur axialen Strömungsrichtung erstreckendes Prallblech (hier nicht gezeigt) vorgelagert sein. Im Bereich eines Deckels 23 wird die Strömung um 180° nach außen umgelenkt. Die Suspension strömt dann in einem radial außenliegenden Abschnitt AA, nämlich zwischen dem Rohr 11 und der Mantelfläche 13 des Behälters, axial in Richtung der Aufgabeöffnung 10. In der Nähe der Aufgabeöffnung 10, d.h. im Bereich des Bodens 24, wird die Strömung um 180° nach innen umgelenkt; die Suspension wird wiederum dem Zylinderabschnitt ZA zugeführt. Durch die Überströmöffnung 12 entweicht kontinuierlich die Menge an Suspension, die dem Reaktor 8 durch die Aufgabeöffnung 10 zugeführt wird. Die Strömungsverhältnisse im Reaktor 8, insbesondere die Geschwindigkeit der koaxialen Umwälzung der Suspension, können durch eine vorteilhafterweise im Bypass 7 eingeschaltete Pumpe 7A beeinflußt werden.

Der Mantel des Reaktors 8 ist weitgehend doppelwandig ausgebildet. Im durch die Doppelwand gebildeten Zwischenraum strömt zur Beheizung der Mantelfläche 13 heißes Thermalöl. Das Thermalöl wird in einem Thermalölerhitzer 14 mittels eines Brenners 15 oder elektrisch erhitzt. Es wird im Kreislauf über den zweiten Wärmetauscher 9 und die Mantelfläche 13 geführt.

Zusätzlich zur oder anstelle der mantelseitigen Thermalölbeheizung des Reaktors 8 sind innerhalb des Reaktors 8 mehrere Magnetrons 25 befestigt, mit denen Mikrowellen auf die im Reaktor 8 befindliche Suspension eingestrahlt werden.

Die den Reaktor 8 durch die Überströmöffnung 12 verlassende Suspension gelangt über den ersten Wärmetauscher 6 in eine Strippkolonne 16. Dort wird der Druck auf etwa 1,5 bar entspannt. Hydrolysegas wird vorteilhafterweise mittels einer Einrichtung 17 zum Abziehen von Hydrolysegas abgezogen. Der in der Suspension verbleibende Feststoff kann in einem optional vorgesehenen Dekanter 18 abgetrennt werden. Die Suspension bzw. die Flüssigkeit wird sodann einem Vorlagebehälter 19 und von da einem Fermenter 20 zugeführt. Im Fermenter 20 werden die organischen Restsubstanzen unter Einwirkung anaerober Mikroorganismen unter Bildung von Biogas weiter abgebaut. Das entstehende Trübwasser kann zur Herstellung neuer Suspension dem Anmaischbehälter 3 über eine Verbindungsleitung 22 zugeführt oder als Endprodukt dem Prozeß entzogen werden. Sofern es dem Prozeß entzogen wird, besteht die Möglichkeit, mittels eines statischen Eindickers 21 den Feststoffgehalt im Trübwasser weiter zu reduzieren.

Statt organischen Feststoffen können auch organische Flüssigkeiten als Ausgangstoffe verwendet werden. In diesem Fall wird auf eine Herstellung einer Suspension verzichtet. Die zu behandelnde Flüssigkeit wird in diesem Fall, ggf. nach Vorerwärmung und Abscheidung von Fettphasen, direkt in den Reaktor 8 gepumpt. Die behandelte Flüssigkeit kann gegebenenfalls einer weiteren Verwendung ohne vorherige mikrobiologische Behandlung zugeführt werden.

Als besonders vorteilhaft hat sich das erfindungsgemäße Verfahren zur Entsorgung von Emulsionen, z.B. Bohrölemulsionen, erwiesen. Dazu wird eine ggf. vorerwärmte Emulsion im Reaktor 8 einem Druck von 10 - 40 bar und einer Temperatur von 170-240°C sowie der Einwirkung von Mikrowellen eine Frequenz von 2,2 Ghz ausgesetzt. Die eingestrahlte Leistung beträgt zweckmäßigerweise 1,1 KW/0,2 l. Die Mikrowelleneinwirkung bewirkt eine Zerstörung der Emulgatoren. Die durch die Überströmöffnung 12 abgezogene Substanz besteht dann aus einem zweiphasigen Gemisch. Dieses kann mittels eines dem Reaktor 8 vorteilhafterweise nachgeschalteten Dekanters problemlos getrennt und entsorgt werden.

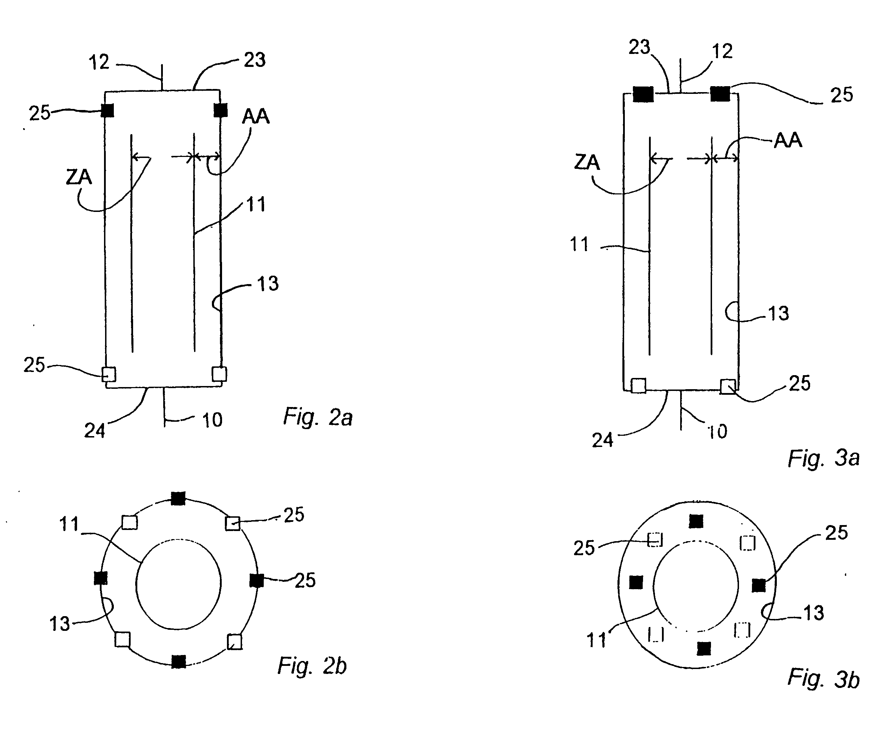

Die Fig. 2a bzw. 2b zeigen ein erstes Ausführungsbeispiel eines Reaktors 8 im schematischen Querschnitt bzw. im Axialschnitt. Im Bereich des Bodens 24 sowie des Deckels 23 des Reaktors 8 sind jeweils in einer Ebene vier Magnetrons 25 gleichmäßig über den Umfang verteilt. Die in der Nähe des Bodens 24 angeordneten Magnetrons 25 sind gegenüber den in der Nähe des Deckels 23 angeordneten Magnetrons 25 um 45° versetzt.

Die Fig. 3a bzw. 3b zeigen ein zweites Ausführungsbeispiel eines Reaktors 8 im schematischen Querschnitt bzw. im Axialschnitt. Dabei sind wiederum in um 45° versetzter Anordnung jeweils vier Magentons 25 am Boden 24 sowie am Deckel 23 des Reaktors 8 angebracht. Die Magnetrons 25 ragen bei diesem Ausführungsbeispiel ins Innere des Reaktors 8 hinein. Sie sind gegen den Reaktorinnenraum druckdicht mittels eines mikrowellentransparenten Materials, wie Glas, Keramik oder Kunststoff, abgedichtet. Bei den Magnetrons 25 handelt es sich vorzugsweise um mit einem Flansch (hier nicht dargestellt) versehene kompakte Baueinheiten, die lösbar mit dem Reaktor 8 verbunden sein können.

Im Reaktor 8 wird unter Einwirkung von Mikrowellenenergie eine Temperatur-Druck-Hydrolyse bei den vorstehenden Temperaturen durchgeführt. Der Druck liegt dabei so weit über dem Dampfdruck der Suspension bzw. Flüssigkeit, daß die flüssige Phase aufrechterhalten bleibt. Damit gelingt es selbst stabile, insbesondere toxische, organische Verbindungen abzubauen.

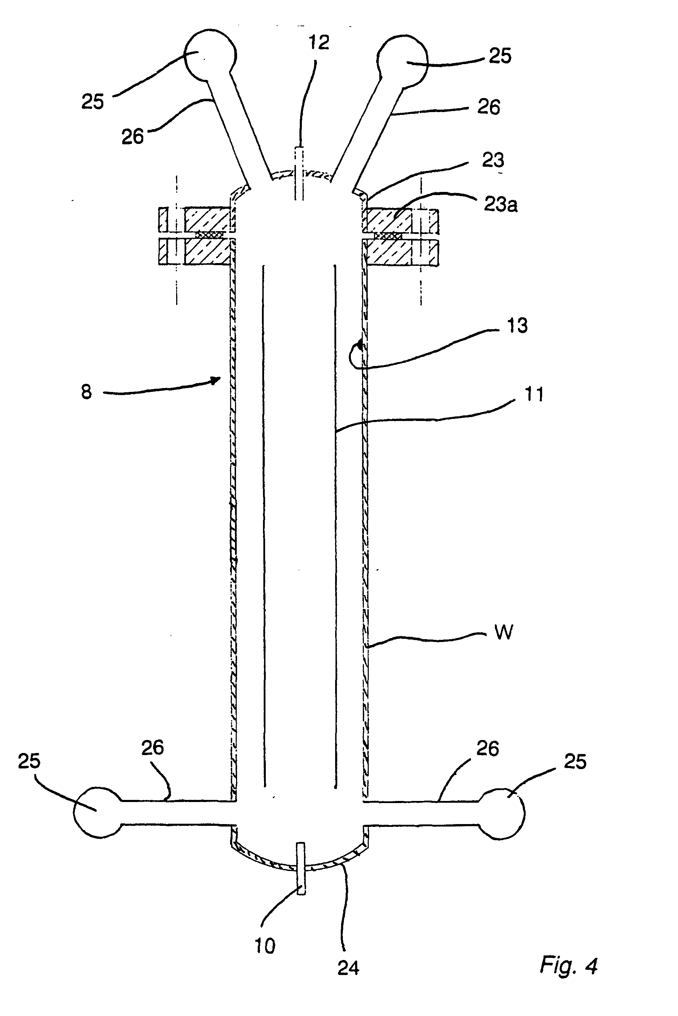

In Fig. 4 ist schematisch ein Querschnitt eines dritten Ausführungsbeispiels gezeigt. Dabei sind mehrere Magnetrons 25 über Wellenleiter 26 am Deckel 23 sowie in der Nähe des Bodens 24 des Reaktors 8 befestigt. Der Deckel 23 weist einen Flansch 23a zur Verbindung mit einem Reaktorbehälter auf. Eine den Reaktor 8 umschließende Reaktorwand ist W bezeichnet.

Sie umfaßt neben dem Deckel 23 und dem Boden 24 auch den die Mantelfläche 13 aufweisenden Mantel.

Das Rohr 11 ist hier aus einem mikrowellentransparenten Material, wie Glas oder Keramik, hergestellt. So wird eine gleichmäßige Beaufschlagung der im Reaktor 8 aufgenommenen Substanz mit Mikrowellenenergie erreicht.

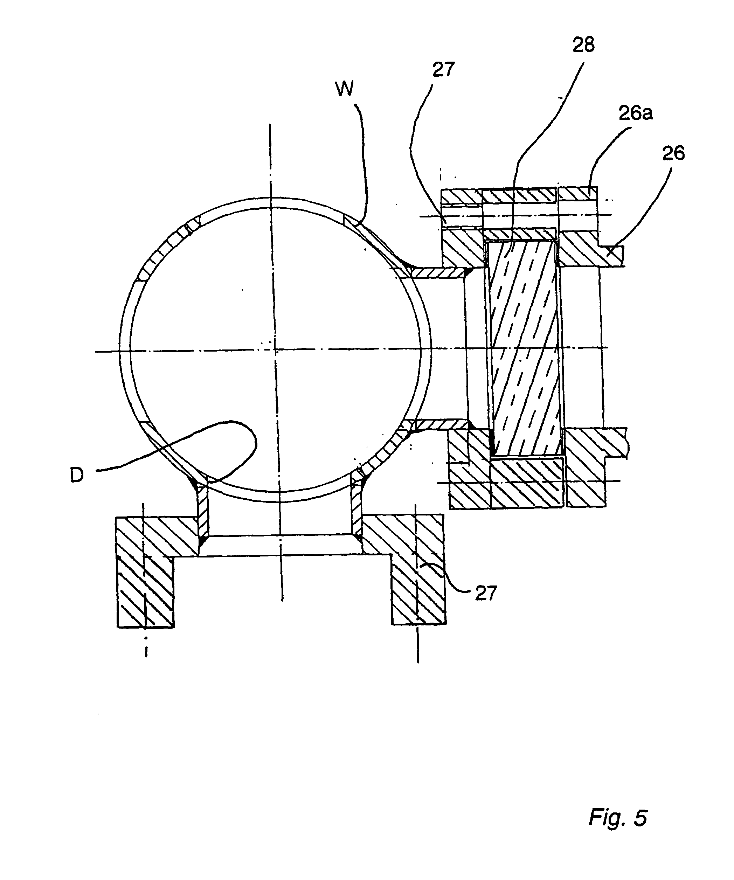

In Fig. 5 ist ein Axialschnitt eines vierten Ausführungsbeispiels gezeigt. Der Wellenleiter 26 weist reaktorseitig einen Wellenleiterflansch 26a auf. Die Reaktorwand W ist mit mehreren Durchbrüchen D versehen, die jeweils in einen Reaktorflansch 27 münden. Zwischen dem Reaktorflansch 27 und dem Wellenleiterflansch 26a ist dichtend ein mikrowellentransparentes Fenster 28 vorgesehen.

### Bezugszeichenliste

- 1: Behälter
- 2: Zerkleinerungsvorrichtung
- 3: Anmaischbehälter
- 4: Grobfilter
- 5: Hochdruckpumpe
- 6: erster Wärmetauscher
- 7: Bypass
- 7A: Pumpe
- 8: Reaktor
- 9: zweiter Wärmetauscher
- 10: Aufgabeöffnung
- 11: Rohr
- 12: Überströmöffnung
- 13: Mantelfläche
- 14: Thermalölerhitzer
- 15: Brenner
- 16: Strippkolonne
- 17: Einrichtung zum Abziehen von Hydrolysegas
- 18: Dekanter
- 19: Vorlagebehälter
- 20: Fermenter
- 21: statischer Eindicker
- 22: Verbindungsleitung
- 23: Deckel
- 23a: Flansch
- 24: Boden
- 25: Magnetron
- 26: Wellenleiter
- 26a: Wellenleiterflansch
- 27: Reaktorflansch
- 28: mikrowellentransparentes Fenster

- ZA: Zylinderabschnitt
- AA: radial außenliegender Abschnitt
- W: Reaktorwand
- D: Durchbruch

## Patentansprüche

1. Verfahren zum kontinuierlichen Abbau organischer Substanzen, insbesondere Bioabfällen, Kantinenabfällen, Fleischabfällen, Klärschlämmen, nachwachsenden Rohstoffen, organischen Industrieabfällen, Emulgatoren in Bohrölemulsionen und dgl., wobei die Substanz in einem zylindrischen eine Reaktorwand (W) aufweisenden Reaktor (8) unter Druck gesetzt und mittels Mikrowelleneinwirkung beheizt wird, **dadurch gekennzeichnet,** daß die zu behandelnde Substanz im Reaktor (8) in einem radial innenliegenden Zylinderabschnitt (ZA) axial in eine erste Richtung und in einem radial außenliegenden Abschnitt (AA) axial in eine zweite Richtung strömt, wobei die zweite Richtung der ersten Richtung entgegengesetzt ist.

2. Verfahren nach Anspruch 1, wobei die erste Richtung gegen eine Überströmöffnung (12) und die zweite Richtung gegen eine Aufgabeöffnung (10) gerichtet ist.

3. Verfahren nach Anspruch 2, wobei an der Aufgabeöffnung (10) ein die Strömung im Reaktor (8) aufrechterhaltender Triebstrahl erzeugt wird.

4. Verfahren nach einem der vorhergehenden Ansprüche, wobei als Reaktor (8) ein Schlaufenreaktor verwendet wird, in dem der radial innenliegende Zylinderabschnitt (ZA) gegen den radial außenliegenden Abschnitt (AA) durch ein axial angeordnetes, vorzugsweise mikrowellentransparentes, Rohr getrennt ist.

5. Verfahren nach einem der vorhergehenden Ansprüche, wobei die Mantelfläche (13) des Reaktors (8) beheizt wird.

6. Verfahren nach Anspruch 5, wobei die Mantelfläche (13) zum Beheizen mit einem heißen Medium, vorteilhafterweise mit Öl, umströmt wird.

7. Verfahren nach einem der vorhergehenden Ansprüche, wobei in der Substanz enthaltene Feststoffe vor der Mikrowelleneinwirkung auf Partikelgrößen von 10 - 20 mm zerkleinert werden.

8. Verfahren nach einem der vorhergehenden Ansprüche, wobei die organische Substanz vor dem Eintritt in den Reaktor (8) erwärmt wird.

9. Verfahren nach einem der vorhergehenden Ansprüche, wobei vor dem Eintritt in den Reaktor (8) Fettphasen aus der organischen Substanz abgeschieden werden.

10. Verfahren nach einem der vorhergehenden Ansprüche, wobei der Druck nach der Mikrowelleneinwirkung in einer Strippkolonne (16) entspannt wird.

11. Verfahren nach einem der vorhergehenden Ansprüche, wobei aus der Strippkolonne (16) abgezogene organische Substanz unter Einwirkung anaerober Mikroorganismen unter Bildung von Biogas umgesetzt wird.

12. Verfahren nach Anspruch 11, wobei bei der Umsetzung entstehendes Biogas als Energieträger zur Erwärmung der organische Substanz und/oder zum Beheizen des Reaktors (8) verwendet wird.

13. Verfahren nach Anspruch 11 oder 12, wobei bei der Umsetzung verbleibendes Wasser zur Herstellung einer die organische Substanz enthaltenden Suspension verwendet wird.

14. Verfahren nach einem der vorhergehenden Ansprüche, wobei die organische Substanz im Reaktor (8) einer Temperatur-Druck-Hydrolyse (TDH) unterzogen wird.

15. Verfahren nach einem der vorhergehenden Ansprüche, wobei die Mikrowellenenergie durch mindestens ein an der Reaktorwand (W) angebrachtes Mittel (25) zur Erzeugung von Mikrowellen abgegeben wird.

16. Verfahren nach einem der vorhergehenden Ansprüche, wobei die vom Mittel (25) zur Erzeugung von Mikrowellen erzeugten Mikrowellen mittels eines Wellenleiters (26) in den Reaktor (8) eingekoppelt werden.

17. Verfahren nach einem der vorhergehenden Ansprüche, wobei das Mittel (25) zur Erzeugung von Mikrowellen und der Reaktor (8) durch ein mikrowellentransparentes Fenster (28) getrennt werden.

18. Verfahren nach einem der vorhergehenden Ansprüche, wobei die Mikrowellen durch mehrere in der Nähe des Bodens (24) und/oder des Deckels (23) und/oder der Mantelfläche (13) des Reaktors (8) angeordnete Mittel (25) zur Erzeugung von Mikrowellen abgegeben werden.

19. Verfahren nach einem der vorhergehenden Ansprüche, wobei die Mikrowellen durch mindestens ein Magnetron (25) erzeugt werden.

20. Verfahren nach Anspruch 18 oder 19, wobei in der Nähe des Bodens (24) vorgesehenen Mittel (25) zur Erzeugung von Mikrowellen gegen die in der Nähe der Deckels (23) vorgesehenen Mittel (25) zur Erzeugung von Mikrowellen radial versetzt sind.

## Claims

1. Process for the continuous degradation of organic substances, in particular biowastes, canteen waste materials, meat waste materials, clarification sludges, renewable raw materials, organic industrial waste materials, emulsifiers in drilling-oil emulsions and the like, in which process the substance is placed under pressure in a cylindrical reactor (8), which has a reactor wall (W), and is heated by the action of microwaves, **characterized in that** the substance which is to be treated, in the reactor (8), flows in a first axial direction in a radially inner cylinder section (ZA) and flows in a second axial direction in a radially outer section (AA), the second direction being opposite to the first direction.

2. Process according to Claim 1, in which the first direction is directed toward an overflow opening (12) and the second direction is directed toward a feed opening (10).

3. Process according to Claim 2, in which a propulsive jet which maintains the flow in the reactor (8) is generated at the feed opening (10).

4. Process according to one of the preceding claims, in which the reactor (8) used is a loop reactor in which the radially inner cylinder section (ZA) is separated from the radially outer section (AA) by an axially arranged tube which is preferably transparent to microwaves.

5. Process according to one of the preceding claims, in which the circumferential surface (13) of the reactor (8) is heated.

6. Process according to Claim 5, in which a hot medium, advantageously oil, flows around the circumferential surface (13) for heating purposes.

7. Process according to one of the preceding claims, in which solids which are contained in the substance are comminuted to particle sizes of 10-20 mm prior to the microwaves being applied.

8. Process according to one of the preceding claims, in which the organic substance is heated before it enters the reactor (8).

9. Process according to one of the preceding claims, in which fatty phases are separated out of the organic substance before it enters the reactor (8).

10. Process according to one of the preceding claims, in which the pressure is reduced in a stripper column (16) after the microwaves have acted.

11. Process according to one of the preceding claims, in which organic substance which is extracted from the stripper column (16) is converted under the action of anaerobic microorganisms, so as to form fermentation gas.

12. Process according to Claim 11, in which fermentation gas which is formed during the conversion is used as fuel for warming the organic substance and/or for heating the reactor (8).

13. Process according to Claim 11 or 12, in which water which remains during the conversion is used to produce a suspension containing the organic substance.

14. Process according to one of the preceding claims, in which the organic substance is subjected to a temperature-pressure hydrolysis (TPH) in the reactor (8).

15. Process according to one of the preceding claims, in which the microwave energy is emitted by at least one means (25) for generating microwaves, which is arranged on the reactor wall (W).

16. Process according to one of the preceding claims, in which the microwaves which are generated by the means (25) for generating microwaves are introduced into the reactor (8) by means of a waveguide (26).

17. Process according to one of the preceding claims, in which the means (25) for generating microwaves and the reactor (8) are separated by a window (28) which is transparent to microwaves.

18. Process according to one of the preceding claims, in which the microwaves are emitted by a plurality of means (25) for generating microwaves, which are arranged in the vicinity of the base (24) and/or of the cover (23) and/or of the circumferential surface (13) of the reactor (8).

19. Process according to one of the preceding claims, in which the microwaves are generated by at least one magnetron (25).

20. Process according to Claim 18 or 19, in which means (25) for generating microwaves which are provided in the vicinity of the base (24) are radially offset with respect to the means (25) for generating microwaves which are provided in the vicinity of the cover (23).

## Revendications

1. Procédé pour le traitement en continu de substances organiques, en particulier de déchets biologiques, de déchets de cantine, de déchets de viande, de boues de curage, de matières brutes renouvelables, de déchets industriels organiques, d'émulsifiants d'émulsions d'huile d'alésage et équivalents, dans lequel la substance est soumise à une pression dans un réacteur (8) cylindrique présentant une paroi de réacteur (W), et chauffée sous l'action de micro-ondes, caractérisé en ce que la substance à traiter dans le réacteur (8) passe axialement selon une première direction dans un segment de cylindre radial interne (ZA), et axialement selon une seconde direction dans un segment radial externe (AA), la seconde direction étant opposée à la première direction.

2. Procédé selon la revendication 1, dans lequel la première direction est orientée vers une ouverture de trop-plein (12), et la seconde direction est orientée vers une ouverture d'alimentation (10).

3. Procédé selon la revendication 2, dans lequel un jet moteur qui maintient l'écoulement dans le réacteur (8) est généré au niveau de l'ouverture d'alimentation (10).

4. Procédé selon l'une des revendications précédentes, dans lequel on utilise une colonne à bulles à écoulement en boucle en tant que réacteur (8), dans laquelle le segment de cylindre radial interne (ZA) est séparé du segment radial externe (AA) par un tube disposé axialement, de préférence transparent aux micro-ondes.

5. Procédé selon l'une des revendications précédentes, dans lequel la surface de l'habillage (13) du réacteur (8) est chauffée.

6. Procédé selon la revendication 5, dans lequel la surface de l'habillage (13) est parcourue, pour le chauffage, par un milieu chaud, d'une façon préférentielle par de l'huile.

7. Procédé selon l'une des revendications précédentes, dans lequel les matières solides contenues dans la substance sont broyées avant l'action des micro-ondes pour atteindre une taille de particules comprise entre 10 et 20 mm.

8. Procédé selon l'une des revendications précédentes, dans lequel la substance organique est chauffée avant introduction dans le réacteur (8).

9. Procédé selon l'une des revendications précédentes, dans lequel les phases grasses sont séparées de la substance organique avant introduction dans le réacteur (8).

10. Procédé selon l'une des revendications précédentes, dans lequel la pression est déchargée après l'action des micro-ondes dans une colonne de fractionnement (16).

11. Procédé selon l'une des revendications précédentes, dans lequel la substance organique soutirée de la colonne de fractionnement (16) est convertie sous l'action de micro-organismes anaérobies pour former du biogaz.

12. Procédé selon la revendication 11, dans lequel le biogaz généré lors de la conversion est utilisé en tant que source d'énergie pour chauffer la substance organique et/ou pour chauffer le réacteur (8).

13. Procédé selon la revendication 11 ou 12, dans lequel l'eau restant lors de la conversion est utilisée pour préparer une suspension contenant la substance organique.

14. Procédé selon l'une des revendications précédentes, dans lequel la substance organique dans le réacteur (8) est soumise à une hydrolyse en température et pression (TDH).

15. Procédé selon l'une des revendications précédentes, dans lequel l'énergie micro-ondes est émise par au moins un moyen (25) de génération de micro-ondes appliqué au niveau de la paroi du réacteur (W).

16. Procédé selon l'une des revendications précédentes, dans lequel les micro-ondes générées par le moyen (25) de génération de micro-ondes sont introduites dans le réacteur (8) au moyen d'un guide d'ondes (26).

17. Procédé selon l'une des revendications précédentes, dans lequel le moyen (25) de génération de micro-ondes et le réacteur (8) sont séparés par une fenêtre transparente aux micro-ondes (28).

18. Procédé selon l'une des revendications précédentes, dans lequel les micro-ondes sont émises par plusieurs moyens (25) de génération de micro-ondes disposés à proximité du fond (24) et/ou du couvercle (23) et/ou de la surface de l'habillage (13) du réacteur (8)

19. Procédé selon l'une des revendications précédentes, dans lequel les micro-ondes sont générées par au moins un magnétron (25).

20. Procédé selon la revendication 18 ou 19, dans lequel des moyens (25) de génération de micro-ondes prévus à proximité du fond (24) sont décalés radialement par rapport aux moyens (25) de génération de micro-ondes prévus à proximité du couvercle (23).
